# NEW EUROPEAN PATENT SPECIFICATION

(11) **EP 1 375 603 B2**
(45) Date of publication and mention of the opposition decision: **05.12.2012**
(45) Mention of the grant of the patent: 24.08.2005
(21) Application number: 02714221.5
(22) Date of filing: 15.03.2002
(51) Int. Cl.: C09D 5/00

(54) **NOVEL WATER PAINTS HAVING COLOURS ASSOCIATED WITH FRAGRANCES, THE PREPARATION METHOD THEREOF AND APPLICATIONS**
NEUARTIGE, WASSERBASIERTE FARBEN, DIE MIT RIECHSTOFFEN ASSOZIIERT SIND, HERSTELLUNG UND ANWENDUNG
NOUVELLES PEINTURES A L'EAU DONT LA COULEUR EST ASSOCIEE A UN PARFUM, PROCEDE DE PREPARATION ET APPLICATIONS

(30) Priority: 15.03.2001 ES 200100611
(43) Date of publication of application: 02.01.2004
(73) Proprietor: Pinturas Blatem, S.L., 46900 Torrente (Valencia) (ES)
(72) Inventor: LUNA CACHINERO, José, E-46900 Torrente (Valencia) (ES)
(74) Representative: Ungria Lopez, Javier
(86) International application number: PCT/ES2002/000125
(87) International publication number: WO 2002/074867

(56) References cited:
- ES-A- 2 004 082
- US-A- 5 474 805
- DATABASE WPI Derwent Publications Ltd., London, GB; AN 1999-572588, XP002957539 & CN 1 224 741 A (TONG Z) 04 August 1999

## Description

The present invention fits in the technical field of paints used to coat walls in general.

More specifically, the present invention provides some novel environmentally acceptable paints, wherein the color thereof has a fragrance related to said color.

### PRIOR ART OF THE INVENTION

Traditionally, paint in the construction sector is understood as the finish on inside and outside walls of a building by means of applying a layer of fluid material that contains dissolved color pigments. Said application tends to be done with brushes, rollers or spraying machines. In general, milk of lime to which, aside from the coloring material, a component, such as glue, resins, is added to increase the fixing thereof, is used. Silicate-based, silicone-based and synthetic material-based paints have also been used. Once these paints are hard, they are water-insoluble, resistant to the action of atmospheric agents and washable.

From the chemical point of view, a paint may be considered as a mixture uniformly dispersed that has a viscosity range from a fluid liquid to a semi-solid paste and that consists of (1) a drying oil, synthetic resin or components that form a film, called binding agent; (2) a solvent or diluent; and (3) an organic or inorganic pigment. The binding agent and the solvent together can be called a "vehicle".

Paints are used for multiple applications, among which protection of metal surfaces against corrosion, rust or any other type of external aggression, decoration, can be cited.

Depending on the desired final purpose, there are different types of paints, among which we can point out water paints (also known as water paints or emulsion paints), asphalt paints, varnishes, gel paints.

The present invention centers on paints which are water paints, used to coat inside or outside walls in construction.

In general, water paints may be considered as those comprised of two dispersions, one dispersion of dry powder (colorants, fillers, spreading agents) and a resin dispersion. The first dispersion is obtained by grinding the solid materials in water. In turn the resin dispersion is a latex normally obtained by polymerization of the emulsion or else from a resin in emulsion form. Emulsion paint is obtained by mixing both dispersions. Furthermore, one or several surface active agents and protective colloids tend to be needed in order to stabilize said mixture.

Water paints or emulsion paints are characterized in that the binding agent is in aqueous dispersion form, when in the remaining types of paints it is a solution in an appropriate solvent. In such a case, as the binding agent is in a disperse form, the external water phase controls the viscosity; the polymer used is preferably a polymer with a high molecular weight, for example, styrene-butadiene latex, polyvinyl acetate and acrylic resins stand out.

This type of paint can be used successfully to coat walls of the insides of buildings as well as outside walls, with the advantage that it is easy to handle and apply and lacks the inconvenience of inflammability and toxic emanations for the user due to the organic solvents used in other types of paint. Hence, the odor of water paints is not so strong, penetrating or unpleasant as the odor of varnish.

Nonetheless, there is no doubt that when insides of a building are painted, either for a permanent dwelling, work place, or temporary housing of people (hotels, homes, restaurants, schools, the odor that the paint gives off the first few days until it has completely dried and become fixed to the wall is quite bothersome for people who have to tolerate it and they are forced to ventilate as much as possible in order to speed up the disappearance of the odor.

Some attempts have been made to deodorize paints, varnishes, some of which are under the protection of a patent or patent application.

Hence, for example, the applicant in its bibliographic searches related to this matter, has found the following documents in the broad field of paints in general.
- Spanish patent publication no. 2004082 refers to a method for the preparation of varnishes with additives. Specifically, this patent describes varnish preparations to which biologically active products that have a specific action for a prophylactic purpose to neutralize or prevent the irritating effect on the respiratory mucous membrane and conjunctiva of the volatile components of varnishes, have been added. The patent also provides for the adding of systems of conveniently mixed and dosed terpenic substances in such a way that they give varnish a pleasant odor. Therefore, it is a question of covering up the odor of the solvents with products with a pleasant odor.
- European patent publication no. 0385771 refers to an opaque, abrasive, separable compound giving off a fragrance, a coating and the article. More specifically, this patent presents a method to give off a fragrance that reveals a message. The compound may be a dispersion comprised of an opaque material in particles, breakable microcapsules that contain a fragrant material, a binder to adhere the opaque material in particles and the microcapsules when the compound is applied and dried on a substrate, a solvent compatible with said materials. Said compound is applied on an article that supports a message to hide at least one part of the message, forming at least one part of the message, forming a coating. When the coating is separated abrasively (for example, by scratching with a coin, or with a finger), some of the microcapsules break in order to release a fragrant material at the same time that the hidden part corresponding to the message is uncovered.
- European patent publication no. 0622402 refers to vesicular polymeric pearls, which are prepared by heating an emulsion of oil in water, that contains a degradable polymer and a copolymerizable monomer in the oil phase, in the presence of an initiator to cure polymeric pearls, where the curing begins in a first phase, in the presence of a substantially water-insoluble initiator and, when the pearls are stable enough, the curing is completed in a second phase, in the presence of at least a partially water-soluble initiator. Preferably, the curing is ended at a temperature higher than the one of the first phase. One of the applications of said pearls is the use thereof in paint formulations with hardly any odor.

European patent publication no. 0781298 refers to N-acyl amino ethylene phosphonates that are used as stabilizers against gasification in water-based coating formulations that contain metal pigments, which are normally reactive with water or moisture and hence give off hydrogen gas.

Although this last example does not refer exactly to the problem of odor, it is representative of a way to stabilize water paints against the giving off of gases less irritant for the mucous membranes of humans and animals.

US-5,474,805 discloses a method for preparing printed palettes of water color inks or paints containing microencapsulated scents The palette is intended for subsequent re-wetting and transfer by a user, and the odor is perceived once the painted surface is dried and scratched for example, with a nail.

The Chinese patent CN1224741 discloses a fragrant, multicolor, water based, building paint. However there is no disclosure or suggestion of a relationship between the fragrance and the color of the paint. Furthermore, the paint is a multicolor paint and the amount of perfume added - as optional component - is between 1.5 and 2.5 parts by weight of the composition.

Therefore, it can be seen that the problem of the odor given off by water paints during the first few days after application thereof is still not satisfactorily solved. Furthermore, in general, the user wishes to immediately use the recently painted space.

Therefore, it would be very interesting to find formulations for water paints free of odor or with a pleasant, non-aggressive, non-irritant fragrance.

The applicant has directed its research efforts along these lines achieving some novel water paints wherein their color is associated with a fragrance, the preparation method thereof and applications thereof.

### DETAILED DESCRIPTION OF THE INVENTION

The present invention refers to a water paint for its use in the construction sector characterized in that it comprises the following components;
(I) 10-20% by weight of a water-based emulsion capable of forming a film at 0°C and whose composition in residual monomers is less than 200 ppm (parts per mullion);
(II) 8-18% by weight of a pigment;
(III) 35-55% by weight of natural, precipitated, micronized calcium carbonates;
(IV) 3-8% by weight of micronized talcs and kaolins;
(V) 0.1-1% by weight of polyphosphates and sodium polyacrylate;
(VI) 0.1-1% by weight of an anti-foaming agent whose base is a mineral oil;
(VII) 0.1-0.5% by weight of an isothiazolone-based preservative, said isothiazolones comprising 1-2% by weight of the total preservative;
(VII) 0.1-1% by weight of a cellulose thickening agent of the methylhydroxyethyl-cellulose or hydroxyethyl-cellulose type;
(IX) 0.01-0.08% by weight of sodium hydroxide as an alkalinizing agent;
(X) 20 45% by weight of water with a hardness less than 10°f (1.78°f = 10 mg/l of CaO);
(XI) 0.02-0.2% by weight of a fragrance whose smell is closely related to the color of the pigment (II),
and the paint is of a color of an object emitting said fragrance, so that there is a correspondence between the paint color and the odor obtained from said fragrance.

It also refers to the preparation method thereof and to applications thereof.

The novel water paints of the present invention are manufactured with special emulsions that have an environmentally acceptable formulation and that are characterized mainly in that they have a color fragrance relationship. Said relationship is such that, once the paint is applied, the space, far from having the typical strong and unpleasant odor of conventional paint, acquires a smell or fragrance in harmony with the shade. In other words, citron blossom for white paints; the smell of roses tor pink paint; the smell of lilacs for violet paint; the smell of cinnamon for camel-colored paints and so on.

Pigment (II) is selected in terms of the shade that is to be given to the paint, among the following compounds: titanium bioxide, red iron oxide, yellow iron oxide, phthalocyanine blue, phthalocyanine green, lampblack, organic yellow, organic red, organic orange and organic violet.

Fragrance (XI) is selected, in terms of the shade that the paint has in such a way that there is a close relationship between the color and the fragrance that can correspond to it. In accordance herewith the fragrance may be selected among the smell of rose, peach, lemon, citrus, banana, lilacs, lavender, apple, vanilla, orange and cinnamon.

In general terms, it is well-known that fragrances are complex mixtures of compounds normally provided with odor, selected among acetates, aldehydes, alcohols, salicylates, natural essential oils and other related compounds.

The water paint of the present invention thus formulated has the following basic qualities: (i) that of being a paint that does not give off an unpleasant, aggressive or bothersome odor when it is being applied to the wall and (ii) that of being a paint that has good technical properties for decoration, especially inside of inhabited spaces. Both qualities are achieved thanks to the strict selection of raw materials and especially the formulation thereof.

In order to prepare the water paint of the present invention, a method that is essentially characterized by the following steps is carried out:
a) obtaining a white base paint formulation;
b) adding to said base paint formulation one or more predispersed pigments to give it the desired color, except in the case of white paint;
c) adding to the colored formulation coming from step b) one or more fragrances related to the color of the final paint.

In order to appropriately carry out the method of the present invention and to obtain a paint with the desired properties, it is necessary to especially comply with the following requirements:
- The water to be used to manufacture the paint should be drinking water with a hardness less than 10°f, the definition of °f being such that 1.78°f = 10 mg/l of Cao.
- The special emulsions used as binding agents should have less than approximately 200 ppm of residual free monomers and should be capable of forming a film at a temperature of approximately 0°C.
- The paint formulation should be free of coalescent agents, which are normal in formulations of all water paints.

The alkaline medium of the formulation should be obtained from sodium hydroxide, instead of from an ammoniacal base as usual.
- The preservatives used should not include anything that releases formol.

In accordance with the above-mentioned formulation of the paint of the present invention and the preparation method thereof, it is possible to provide a paint with some exceptional technical qualities and characteristics for painting purposes.

The following should be emphasized as the most significant ones among said qualities and characteristics for the white base paint:

### As liquid paint

* It does not any lumps or hard sediment in the sealed original container, having a good preservation for approximately 1 year. This period of time is normally longer than 1 year.
* The viscosity of this paint is comprised approximately between 90 KU (Krebs Units) and approximately 120 KU, measured at room temperature, in other words, approximately between 20°C and approximately 30°C.
* The density of the paint is comprised approximately between 1.52 and approximately 1.62 gr/cc.
* The yield that this paint has is approximately between 8 and approximately 12 m²/L and coat of paint, depending on the state of the surface to be painted.
* In a standard application of this paint, it takes approximately between 30 and approximately 60 minutes for the painted surface to dry.

### As applied and dry paint

* It has a smooth and dull finish.
* It has a washability approximately between 3,000 d.w. (double washings) and approximately 5,000 double washings according to DIN 53,778 and UNE 48,284 standards.
* The coating ability of this paint applied at 120 micra of wet products, expressed in contrast ratio, is between a factor of approximately 0.90 and approximately 0.98.
* The degree of fullness that this paint has is expressed by measuring its low degree of shine with a laboratory ByK-Gardner shinemeter, using measurement angles ot 60° and 85°. The shine is approximately lower than 4 with a measurement angle of 60° and approximately lower than 8" with a measurement angle of 85°.

Once the white base paint has been obtained, according to step (a) of the method of the present invention, the predispersed pigments are added to achieve paints in the different desired color range. Obviously, in the event that the final desired paint is precisely white, it is not necessary to carry out step (b) of the method, in other words, it is not necessary to add any colored pigment.

The predispersed pigments selected to obtain the color range of paints are basically; titanium oxide, red iron oxide, yellow iron oxide, phthalocyanine blue, phthalocyanine green, lampblack, organic yellow, organic red, organic orange and organic violet, all of them already mentioned above.

The quality of the selected predispersed pigments and the quantity used in the formulation of each color permits the colored paints of the range not to give oft any unpleasant odor when they are being applied and for the colored paints of the range to maintain the above described good technical properties.

Adding different mixtures of different predispersed colorants to the white base paint, among the above-cited ratio, it is possible to achieve the range of colored paints of the present invention.

Each color is defined in the range of colored paints by making use of the Spectraflash 600 laboratory spectrophotometer (of the firm Datacolor International) and each color of the range is located in a color area defined by a central value that the cielab coordinates L,a,b mark of the cielab color space in light/darkness conditions: F₂ 10 Deg and a DE in accordance with C.M.C. Said range is represented by the following data:

| | | | |
|---|---|---|---|
| **Peach:** It is located in the color area defined by: | | | |
| L - 84.38 | a = 15.61 | b = 38.61 | and a DE = 10 |
| **Pink:** It is located in the color area defined by: | | | |
| L = 83.93 | a = 14.00 | b = 9.53 | and a DE = 10 |
| **Lemon yellow:** It is located in the color area defined by: | | | |
| L = 94.40 | a = -5.11 | b = 47.71 | and a DE = 10 |
| **Banana** :**yellow**: It is located in the color area defined by | | | |
| L - 89.93 | a = 2.49 | b = 57.75 | and a DE = 10 |
| **violet:** It is located in the color area defined by: | | | |
| L - 73.44 | a = 1.24 | b = 25.05 | and a DE = 10 |
| **Blue:** It is located in the color area defined by: | | | |
| L = 72.02 | a = -6.57 | b = -22.24 | and a DE = 10 |
| **Apple green:** It is located in the color area defined by: | | | |
| L = 83.93 | a = -9.84 | b = 21.73 | and a DE - 10 |
| **Vanilla:** It is located in the color area defined by; | | | |
| L = 92.18 | a = 0.20 | b = 35.58 | and a DE = 10 |
| **Orange:** It is located in the color area defined by: | | | |
| L = 82.27 | a = 18.84 | b = 38.65 | and a DE = 10 |
| **Cinnamon:** It is located in the color area defined by: | | | |
| L = 76.01 | a = 11.95 | b = 33.01 | and a DE = 10 |

In order to finish the preparation method of this line of paints, fragrances are added to the colored paints, always maintaining the color-fragrance relationship and the above-mentioned good technical properties of the paints.

The fragrance with a smell of ripe peaches is added to the **peach** colored paint. When this paint is applied in a room, a peach color and a pleasant ripe peach smell will be achieved. The smell of ripe peaches stays in the room for a period of time approximately between 3 days and approximately 7 days depending on the room temperature and the ventilation of the room.

The fragrance with a smell of roses is added to the **pink** colored paint. When this paint is applied in a room, a pink color and a pleasant rose smell will be achieved. The smell of roses stays in the room for a period of time approximately between 3 days and approximately 7 days depending on the room temperature and the ventilation of the room.

The fragrance with a smell of ripe lemons is added to the **lemon** colored paint. When this paint is applied in a room, a lemon yellow color and a pleasant ripe lemon smell will be achieved. The smell of ripe lemons stays in the room for a period of time approximately between 3 days and approximately 7 days depending on the room temperature and the ventilation of the room.

The fragrance with a smell of ripe bananas is added to the banana yellow colored paint. When this paint is applied in a room, a banana yellow color and a pleasant ripe banana smell will be achieved. The smell of ripe bananas stays in the room for a period of time approximately between 3 days and approximately 7 days depending on the room temperature and the ventilation of the room.

The fragrance with a smell of lilacs (violets) is added to the **violet** colored paint. When this paint is applied in a room, a violet color and a pleasant lilac smell will be achieved. The smell of lilacs stays in the room for a period of time approximately between 3 days and approximately 7 days depending on the room temperature and the ventilation of the room.

The fragrance with a smell of lavender is added to the **blue** colored paint. When this paint is applied in a room, a blue color and a pleasant lavender smell will be achieved. The smell of lavender stays in the room for a period of time approximately between 3 days and approximately 7 days depending on the room temperature and the ventilation of the room.

The fragrance with a smell of ripe apples is added to the **apple green** colored paint, When this paint is applied in a room, an apple green color and a pleasant ripe apple smell will be achieved. The smell of ripe apples stays in the room for a period of time approximately between 3 days and approximately 7 days depending on the room temperature and the ventilation of the room.

The fragrance with a smell of vanilla is added to the **vanilla** colored paint. When this paint is applied in a room, a vanilla color and a pleasant vanilla smell will be achieved. The smell of vanilla stays in the room for a period of time approximately between 3 days and approximately 7 days depending on the room temperature and the ventilation of the room.

The fragrance with a smell of ripe oranges is added to the **orange** colored paint. When this paint is applied in a room, an orange color and a pleasant ripe orange smell will be achieved. The smell of ripe oranges stays in the room for a period of time approximately between 3 days and approximately 7 days depending on the room temperature and the ventilation of the room.

The fragrance with a smell of cinnamon is added to the **cinnamon** colored paint. When this paint is applied in a room, a cinnamon color and a pleasant cinnamon smell will be achieved. The smell of ripe lemons stays in the room for a period of time approximately between 3 days and approximately 7 days depending on the room temperature and the ventilation of the room.

The fragrance with a smell of citrus is added to the white colored paint. When this paint is applied in a room, a white color and a pleasant citrus smell will be achieved. The smell of citrus stays in the room for a period of time approximately between 3 days and approximately 7 days depending on the room temperature and the ventilation of the room.

As it was already indicated above, the fragrances are comprised of complex mixtures of compounds that normally have an odor, among which we can cite: acetates, aldehydes, alcohols, salicylates, natural essential oils and other related components.

For example, the quail-quantitative formula of the peach fragrance is approximately the following:
Acetates approximately between 13% and approximately 17%;
Aldehydes approximately between 13% and approximately 18%;
Alcohols approximately between 28% and approximately 38%;
Salicylates approximately between 13% and approximately 18%;
Natural essential oils approximately between 16% and approximately 18%
Rest of the components approximately between 8% and approximately 13%
serves as an illustration.

The approximate breakdown of components that are included in the peach fragrance is the following: benzyl acetate, linalyl acetate, verdyl acetate, phenethyl alcohol, alpha-amylcinnamic aldehyde, alpha-hexylcinnamic aldehyde, alpha-hexylcinnamic aldehyde, gamma-undecalactone, citral, dipropylene glycol, ethyl vanillin, eugenol, fixolide, cryst. Frambinone, extra geraniol, hydroxycitronellal, Lilal, lanolol, limonene, nerol, nitrilomyristica, rose oxide, procamyl, amyl salicylate, benzyl salicylate, hexyl salicylate, alpha-alpha-terpineol, base thioxane, vertocitral, indole, gamma nonalactone, phenyrat, supra cyclomen, ethylmaltol, thiomentone, galaxolide, iso and super, hedione, phlorhydral, gamma-decalactone.

For the remaining fragrances it would be possible to provide similar data, but the applicant understands that this would unnecessarily lengthen the present specification.

### EMBODIMENTS OF THE INVENTION

For the purpose of illustrating the present invention more clearly and without implying any limitation thereof, a specific example for manufacturing a paint with a specific color-fragrance is set forth hereinafter.

### EXAMPLE: Preparation of approximately 1,000 kg. of a peach color paint having a smell of ripe peaches

The paint is manufactured with a dispermix (disperser-mixer, whose shaft and toothed disk has a variable speed up to 1,100 revolutions/minute), in a 750 1. stainless steel tank. With the shaft off and the tank clean approximately between 250 1. and approximately 330 1. of water with a hardness less than 10°f (1.78"f - 10 mg/l. Cao) are placed therein. The toothed disk of the shaft is placed in such a way that it is covered by the water and thus it can be whirred later on. The machine is turned on and the shaft is placed at approximately 500 revolutions/minute, which permits the water to be stirred. Maintaining these stirring conditions the following components of the formula are added in this order: approximately between 1 kg and approximately 5 kg of 50% polyphosphates dissolved in water; approximately between 1 kg and approximately 4 kg. of 40% sodium polyacrylate dissolved in water; approximately between 2 kg. and approximately 6 kg. of anti-foaming agent (mineral oil base); approximately between 1 kg and approximately 4 kg, of preservative whose active principles are isothiazolones, the content in isothiazolones of the preservative being approximately 1.5% by weight. At this stage of manufacturing, with all the components being stirred, the speed is increased to approximately 600 revolutions/minute, approximately between 80 kg. and approximately 120 kg. of titanium bioxide are added and then approximately between 70 kg. and approximately 100 kg. of precipitated calcium carbonate, micronized natural talc and micronized natural kaolin. This mixture is left stirring-dispersing for about 10 minutes. Then the speed is increased approximately between 700 and approximately 800 revolutions/minute and approximately between 350 kg. and approximately 450 kg. of micronized calcium carbonate are added and the stirring-dispersing is maintained for approximately 5 minutes. Taking into account that the cone to the shaft of the mixture is formed well in the boiler for the dispersion. Then approximately between 3 kg. and approximately 6 kg. of methylhydroxyethyl cellulose or hydroxyethylcellulose type cellulose thickener are added and then approximately between 0.5 kg. and approximately between 1 kg. of 50% sodium hydroxide in water is added. At this stage of the method the speed is increased to approximately 1,000 revolutions/minute and this is maintained for approximately 20 minutes, taking into account that the cone to the shaft is formed well for correct dispersion. Then, approximately between 100 kg. and approximately 160 kg. of the water emulsion are added and as the emulsion is added the revolutions are reduced to approximately 750 and then maintained for approximately 5 minutes. Then approximately between 4 kg. and approximately 9 kg. of organic yellow predispersed pigment are added and then approximately between 3 kg. and approximately 7 kg. of organic orange predispersed pigment are added and this is left stirring for about 5 minutes. Finally, approximately between 0.2 kg. and approximately 0.6 kg. of ripe peach smelling fragrance (whose composition has been described above) is added and this is left stirring for about 10 minutes. At this stage of manufacturing, the approximately 1,000 kg. of peach colored paint with a ripe peach smell is manufactured and ready to pass the pertinent quality control, before it is to be marketed.

## Claims

1. A water paint for its use in the construction sector, **characterized in that** it comprises the following components:
(I) 10-20% by weight of a water-based emulsion capable of forming a film at 0°C and whose composition in residual monomers is less than 200 ppm (parts per million);
(II) 8-18% by weight of a pigment;
(III) 35-55% by weight of natural, precipitated, micronized calcium carbonates;
(IV) 3-8% by weight of micronized talcs and kaolins;
(V) 0.1-1% by weight of polyphosphates and sodium polyacrylate;
(VI) 0.1-1% by weight of an anti-foaming agent whose base is a mineral oil;
(VII) 0.1-0.5% by weight of an isothiazolone-based preservative, said isothiazolones comprising 1-2% by weight of the total preservative;
(VII) 0.1-1% by weight of a cellulose thickening agent of the methylhydroxyethyl-cellulose or hydroxyethyl-cellulose type;
(IX) 0.01-0.08% by weight of sodium hydroxide as an alkalinizing agent;
(X) 20-45% by weight of water with a hardness less than 10°f (1.78°f = 10 mg/l of CaO);
(XI) 0.02-0.2% by weight of a fragrance whose smell is closely related to the color of the pigment (II),
and the paint is of a color of an object emitting said fragrance, so that there is a correspondence between the paint color and the odor obtained from said fragrance.

2. Water paint, according to claim 1, **characterized in that** the pigment is selected, in terms of the color that is to be given to the paint, among the following compounds: titanium bioxide, red iron oxide, yellow iron oxide, phthalocyanine blue, phthalocyanine green, lampblack, organic yellow, organic red, organic orange and organic violet.

3. Water paint, according to claim 1, **characterized in that** the fragrance is selected from the group consisting of aromas of rose, peach, lemon, citrus, banana, lilac, lavender, apple, vanilla, orange and cinnamon.

4. Water paint, according to claim 1, **characterized in that** it is free of coalescent agents.

5. Water paint, according to claim 1, **characterized in that** said preservative is free of products capable of giving off formol.

6. Water paint, according to claim 1, **characterized in that** as a liquid paint it does not have any lumps or sediment in the sealed original container, maintaining a good state of preservation for 1 year.

7. Water paint, according to claim 1, **characterized in that** as a liquid paint it has a viscosity of 90-120 K.U., measured at a temperature of 20-30°C.

8. Water paint, according to claim 1, **characterized in that** as a liquid paint it has a density of 1.52-1.62 g/cm³.

9. Water paint, according to claim 1, **characterized in that** as a liquid paint it has a yield of 8-12 m²/l and coat of paint, in terms of the original state of the surface to be painted.

10. Water paint, according to claim 1, **characterized in that** as a liquid paint, in a standard application, it has a surface drying time of about 30-60 minutes.

11. Water paint, according to claim 1, **characterized in that** the dry applied paint has a smooth and dull finish.

12. Water paint, according to claim 1, **characterized in that** as dry and applied paint, it has a washability of 3,000-5,000 d.w. being "d.w." double washings, according to DIN 53,778 and UNE 48,284 standards.

13. Water paint, according to claim 1, **characterized in that** as dry and applied paint it has a coating ability at 120 micra of wet products, expressed in contrast ratio, between a factor of 0.90 and 0.98.

14. Water paint, according to claim 1, **characterized in that** as dry and applied paint it has a degree of dullness corresponding to a shine measurement of <4 to 60° of measurement angle and <8 to 85° of measurement angle.

15. Preparation method of a water paint according to claim 1, **characterized in that** it comprises the following steps:
a) obtaining a white base paint formulation;
b) adding to said base paint formulation one or more predispersed pigments to give it the desired color, except in the case of white paint;
c) adding to the colored formulation coming from step b) one or more fragrances related to the color of the final paint.

16. Preparation method according to claim 15, **characterized in that** in said step (a) all the components cited in claim 2, except the pigments and fragrances are mixed adequately in said step (a) in order to obtain the white base paint.

17. Method according to claim 15, **characterized in that**, except in the case that the final desired paint is of a color other than white, a pigment selected from among titanium oxide, red iron oxide, yellow iron oxide, phthalocyanine blue, phthalocyanine green, lampblack, organic yellow, organic red, organic orange and organic violet is added in said step (b) to said white base paint.

18. Method according to claim 15, **characterized in that** a citrus fragrance is added to said white base paint in said step (c).

19. Method according to claim 15, **characterized in that** the final obtained paint has a color, determined with a Spectraflash 600 - Datacolor International - in the color area defined by a central value that the cielab coordinates L,a,b mark of the cielab color space in light/darkness conditions: F₂ 10 Deg and a DE in accordance with C.M.C. Said range is represented by the following data:
| | | | |
|---|---|---|---|
| **Peach**: It is located in the color area defined by: | | | |
| L = 84.38 | a = 15.61 | b = 38.61 | and a DE = 10 |
| **Pink:** It is located in the color area defined by: | | | |
| L = 83.93 | a = 14.00 | b = 9.53 | and a DE = 10 |
| **Lemon yellow:** It is located in the color area defined by: | | | |
| L = 94.40 | a = -5.11 | b = 47.71 | and a DE = 10 |
| **Banana yellow:** It is located in the color area defined by: | | | |
| L = 89.93 | a = 2.49 | b = 57.75 | and a DE = 10 |
| **Violet**: It is located in the color area defined by: | | | |
| L = 73.44 | a = 1.24 | b = 25.05 | and a DE = 10 |
| **Blue**: It is located in the color area defined by: | | | |
| L = 72.02 | a = -6.57 | b = -22.24 | and a DE = 10 |
| **Apple green**: It is located in the color area defined by: | | | |
| L = 83.93 | a = -9.84 | b = 21.73 | and a DE = 10 |
| **Vanilla**: It is located in the color area defined by: | | | |
| L = 92.18 | a = 0.20 | b = 35.58 | and a DE = 10 |
| **Orange**: It is located in the color area defined by: | | | |
| L = 82.27 | a = 18.84 | b = 38.65 | and a DE = 10 |
| **Cinnamon**: It is located in the color area defined by: | | | |
| L = 76.01 | a = 11.95 | b = 33.01 | and a DE = 10 |

20. Method according to claim 19, **characterized in that** a fragrance is added in step (c), in such a way that the fragrance is related to the color of the final paint according to the following associations:
- Peach: ripe peaches
- Pink: roses
- Lemon yellow: ripe lemons
- Banana yellow: ripe bananas
- Violet: lilacs
- Blue: lavender
- Apple green: ripe apples
- Vanilla: vanilla
- Orange: ripe oranges
- Cinnamon: cinnamon

21. Method according to claim 15, **characterized in that** the final obtained paint is white, for which reason step (b) is left out and a citrus fragrance is added in step (c).

22. Method according to claim 15 **characterized in that** the fragrance produces an odor which has a duration, once the paint has been applied of between 3 and 7 days.

23. Method according to claim 15, **characterized in that** said fragrance is comprised of complex chemical mixtures of fragrant compounds of the acetate, aldehyde, alcohol, salicylate and natural essential oil type.

24. Use of water paints of any one of the claims 1 to 14 obtained by the method of any of the preceding claims 15 to 23 to coat and decorate surfaces in the construction sector.

25. Use according to claim 24, **characterized in that** said surfaces are outside as well as inside walls.

26. Use according to claim 25 **characterized in that** said surfaces are inside walls of inhabited spaces.

## Patentansprüche

1. Wässrige Anstreichfarbe zur Verwendung im Bauwesen, **dadurch gekennzeichnet, dass** sie die folgenden Bestandteile umfasst:
(I) 10 - 20 Gew.-% einer auf Wasser basierenden Emulsion, welche geeignet ist, eine Schicht bzw. einen Film bei 0°C zu bilden und deren Zusammensetzung in Restmonomeren weniger als 200 ppm (Teile je Millionen) beträgt;
(II) 8-18 Gew.-% eines Pigmentes;
(III) 35 - 55 Gew.-% natürlicher, ausgefällter, zerkleinerter Kaliumkarbonate;
(IV) 3-8 Gew.-% zerkleinerter Talke und Kaoline;
(V) 0,1 - 1 Gew.-% Polyphosphate und Natriumpolyacrylat;
(VI) 0,1-1 Gew.-% eines Antischaummittels, dessen Basis ein Mineralöl ist;
(VII) 0,1 - 0,5 Gew.-% eines auf Isothiazolon basierenden Konservierungsstoffes, wobei die Isothiazolone 1-2 Gew.-% der gesamten Konservierungsmittel umfassen;
(VIII) 0,1-1 Gew.-% eines Zelluloseverdickungsmittels vom Methylhydroxyethyl-Zellulose- oder Hydroxyethyl-Zellulose-Typ;
(IX) 0,1 - 0,08 Gew.-% Natriumhydroxid als ein alkalisierendes Mittel;
(X) 20 - 45 Gew.-% Wasser mit einer Härte von weniger als 10°f (1,78°f = 10 mg/l CaO);
(XI) 0,02 - 0,2 Gew.-% eines Duftstoffes, dessen Duft eng mit der Farbe des Pigments (II) verwandt ist,
und die Anstreichfarbe eine Farbe eines Gegenstandes aufweist, welcher den Duftstoff ausströmt, so dass es einen Zusammenhang zwischen der Farbe der Anstreichfarbe und dem von dem Duftstoff erhaltenen Duft gibt.

2. Wässrige Anstreichfarbe nach Anspruch 1, **dadurch gekennzeichnet, dass** das Pigment im Hinblick auf die Farbe, die der Anstreichfarbe verliehen werden soll, unter den folgenden Verbindungen ausgewählt ist: Titandioxid, Roteisenoxid, Gelbeisenoxid, Phtalocyaninblau, Phtalocyaningrün, Lampenschwarz, organisches Gelb, organisches Rot, organisches Orange und organisches Violett.

3. Wässrige Anstreichmittel, nach Anspruch 1, **dadurch gekennzeichnet, dass** der Duftstoff aus der Gruppe gewählt ist, bestehend aus Rosen-, Pfirsich-, Zitronen-, Zitrus-, Bananen-, Flieder-, Lavendel-, Apfel-, Vanille-, Orange- und Zimtaromen.

4. Wässrige Anstreichfarbe nach Anspruch 1, **dadurch gekennzeichnet, dass** sie keine nichtselbstständigen Filmbildungsmittel aufweist.

5. Wässrige Anstreichfarbe nach Anspruch 1, **dadurch gekennzeichnet, dass** das Konservierungsmittel keine Erzeugnisse aufweist, die Formol abgeben.

6. Wässrige Anstreichfarbe nach Anspruch 1, **dadurch gekennzeichnet, dass** sie als eine flüssige Anstreichfarbe keine Klumpen oder Sediment in dem versiegelten ursprünglichen Behälter aufweist, und einen guten Konservierungszustand für ein Jahr beibehält.

7. Wässrige Anstreichfarbe nach Anspruch 1, **dadurch gekennzeichnet, dass** sie als eine flüssige Anstreichfarbe eine Viskosität von 90 bis 120 K.U. aufweist, gemessen bei einer Temperatur von 20 bis 30°C.

8. Wässrige Anstreichfarbe nach Anspruch 1, **dadurch gekennzeichnet, dass** sie als eine flüssige Anstreichfarbe eine Dichte von 1,52 bis 1,62 g/cm³ aufweist.

9. Wässrige Anstreichfarbe nach Anspruch 1, **dadurch gekennzeichnet, dass** sie als eine flüssige Anstreichfarbe eine Ausbeute von 8 bis 12 m²/l und Farbbeschichtung aufweist, im Hinblick auf den ursprünglichen Zustand der zu streichenden Oberfläche.

10. Wässrige Anstreichfarbe nach Anspruch 1, **dadurch gekennzeichnet, dass** sie als eine flüssige Anstreichfarbe bei herkömmlichen Anwendungen eine Oberflächentrocknungsdauer von 30 bis 60 Min aufweist.

11. Wässrige Anstreichfarbe nach Anspruch 1, **dadurch gekennzeichnet, dass** die trockene aufgebrachte Farbe einen glatten und matten Oberflächenzustand aufweist.

12. Wässrige Anstreichfarbe nach Anspruch 1, **dadurch gekennzeichnet, dass** sie als trockene und aufgebrachte Anstreichfarbe eine Abwaschbarkeit von 3.000 bis 5.000 d.W. aufweist, wobei "d.W." doppelte Waschungen bedeutet, gemäß DIN 53,778 und UNE 48,284 Standards.

13. Wässrige Anstreichfarbe nach Anspruch 1, **dadurch gekennzeichnet, dass** sie als getrocknete und aufgebrachte Anstreichfarbe ein Beschichtungsvermögen bei 120 Micra von nassen Produkten, ausgedrückt in dem Kontrastverhältnis, zwischen einem Faktor von 0,90 und 0,98 aufweist.

14. Wässrige Anstreichfarbe nach Anspruch 1, **dadurch gekennzeichnet, dass** sie als getrocknete und aufgebrachte Anstreichfarbe ein Maß an Mattheit entsprechend einer Glanzmessung von < 4 bis 60° Messwinkel und < 8 von 85° Messwinkel aufweist.

15. Herstellungsverfahren einer wässrigen Anstreichfarbe gemäß Anspruch 1, **dadurch gekennzeichnet, dass** es die folgenden Schritte umfasst:
a) Erhalten einer Rezeptur der Anstrichfarbe auf weißer Basis;
b) Zugeben zu der Basisrezeptur der Anstreichfarbe eines oder mehrerer vordispergierter Pigmente, um die gewünschte Farbe zu erzielen, mit Ausnahme in dem Fall einer weißen Farbe
c) Zugeben zu der gefärbten Rezeptur aus Schritt (b) einen oder mehrere Duftstoffe, welche mit der Farbe der fertigen Anstreichfarbe zusammenhängen.

16. Herstellungsverfahren gemäß Anspruch 15, **dadurch gekennzeichnet, dass** in dem Schritt (a) alle in Anspruch 2 genannten Bestandteile, mit Ausnahme der Pigmente und Duftstoffe, gleichmäßig in dem Schritt (a) gemischt werden, um die Anstreichfarbe auf weißer Basis zu erhalten.

17. Verfahren nach Anspruch 15, **dadurch gekennzeichnet, dass** in dem Fall, das die fertige erwünschte Anstreichfarbe eine andere Farbe als weiß aufweist, in dem Schritt (b) ein Pigment, gewählt aus Titanoxid, Roteisenoxid, Gelbeisenoxid, Phtalocya-ninblau, Phtalocyaningrün, Lampenschwarz, organisches Gelb, organisches Rot, organisches Orange und organisches Violett, zu der Anstreichfarbe auf weißer Basis zugegeben wird.

18. Verfahren nach Anspruch 15, **dadurch gekennzeichnet, dass** in Schritt (c) ein Zitrusduftstoff zu der Anstreichfarbe auf weißer Basis zugegeben wird.

19. Verfahren nach Anspruch 15, **dadurch gekennzeichnet, dass** die fertige erhaltene Anstreichfarbe eine Farbe, bestimmt mit einem Spectraflash 600 - Detacolor International - in dem Farbbereich aufweist, welcher durch einen zentralen Wert definiert ist, wobei die Cielab Koordinaten L.a.b den Cielab Farbraum bei hellen/dunklen Bedingungen kennzeichnen: F₂ 10 Grad und ein DE gemäß C.M.C., wobei der Bereich durch die folgenden Werte dargestellt wird:
| | | | |
|---|---|---|---|
| **Pfirsich**: ist in dem Farbbereich angeordnet, definiert durch: | | | |
| L = 84,38 | a = 15,61 | b = 38,61 | und ein DE = 10 |
| **Pink**: ist in dem Farbbereich angeordnet, definiert durch: | | | |
| L = 83,93 | a =14,00 | b = 9,53 | und ein DE = 10 |
| **Zitronengelb**: ist in dem Farbbereich angeordnet, definiert durch: | | | |
| L = 94,40 | a = -5,11 | b = 47,71 | und ein DE =10 |
| **Bananengelb**: ist in dem Farbbereich angeordnet, definiert durch: | | | |
| L = 89,93 | a = 2,49 | b = 57,75 | und ein DE = 10 |
| **Violet**: ist in dem Farbbereich angeordnet, definiert durch: | | | |
| L = 73,44 | a =1,24 | b = 25,05 | und ein DE = 10 |
| **Blau**: ist in dem Farbbereich angeordnet, definiert durch: | | | |
| L = 72,02 | a = -6,57 | b =-22,24 | und ein DE =10 |
| **Apfelgrün**: ist in dem Farbbereich angeordnet, definiert durch: | | | |
| L = 83,93 | a = -9,84 | b = 21,73 | und ein DE =10 |
| **Vanille**: ist in dem Farbbereich angeordnet, definiert durch: | | | |
| L = 92,18 | a = 0,20 | b = 35,58 | und ein DE =10 |
| **Orange**: ist in dem Farbbereich angeordnet, definiert durch: | | | |
| L = 82,27 | a =18,84 | b = 38,65 | und ein DE =10 |
| **Zimt**: ist in dem Farbbereich angeordnet, definiert durch: | | | |
| L = 76,01 | a =11,95 | b = 33,01 | und ein DE =10. |

20. Verfahren nach Anspruch 15, **dadurch gekennzeichnet, dass** in dem Schritt (c) ein Duftstoff zugegeben wird, auf solch eine Weise, dass der Duftstoff mit der Farbe des fertigen Anstreichmittels zusammenhängt, gemäß der folgenden Assoziationen:
- Pfirsich: reife Pfirsiche
- rosa: Rosen
- Zitronengelb: reife Zitronen
- Bananengelb: reife Bananen
- Violett: Flieder
- Blau: Lavendel
- Apfelgrün: reife Äpfel
- Vanille: Vanille
- Orange: reife Orangen
- Zimt: Zimt.

21. Verfahren nach Anspruch 15, **dadurch gekennzeichnet, dass** die fertig erhaltene Anstreichfarbe weiß ist, so dass der Schritt (b) ausgelassen wird und in Schritt (c) ein Zitronenduft zugegeben wird.

22. Verfahren nach Anspruch 15, **dadurch gekennzeichnet, dass** der Duftstoff einen Duft erzeugt, welcher eine Dauer, nachdem die Farbe aufgebracht wurde, von zwischen 3 und 7 Tagen besitzt.

23. Verfahren nach Anspruch 15, **dadurch gekennzeichnet, dass** der Duftstoff komplexe chemische Mischungen von duftenden Verbindungen des Acetat-, Aldehyd-, Alkohol-, Salicylat-Typs und des des Typs von natürlichen ätherischen ölen umfasst.

24. Verwendung der wässriger Anstreichfarbe nach einem der Ansprüche 1 bis 14, erhalten durch das Verfahren nach einem der vorangehenden Ansprüche 19 bis 27, um Oberflächen im Bauwesen zu beschichten und zu dekorieren.

25. Verfahren nach Anspruch 24, **dadurch gekennzeichnet, dass** die Oberflächen Außenwie auch Innenwände sind.

26. Verwendung nach Anspruch 25, **dadurch gekennzeichnet, dass** die Oberflächen Innenwände von bewohnten Räumen sind.

## Revendications

1. Peinture à l'eau destinée à être utilisée dans le secteur de la construction, **caractérisée en ce qu'**elle comprend :
(I) 10 à 20% en poids d'une émulsion à base d'eau capable de former un film à 0°C et dont la composition en monomères résiduels est inférieure à 200 ppm (parties par million) ;
(II) 8 à 18% en poids d'un pigment ;
(III) 35 à 55% en poids de carbonates de calcium précipités et micronisés naturels ;
(IV) 3 à 8% en poids de talcs et kaolins micronisés ;
(V) 0,1 à 1% en poids de polyphosphates et de polyacrylate de sodium ;
(VI) 0,1 à 1% en poids d'un agent antimousse dont la base est une huile minérale ;
(VII) 0,1 à 0,5% en poids d'un conservateur à base d'isothiazolone, lesdites isothiazolones représentant 1 à 2% en poids du conservateur total ; ;
(VIII) 0,1 à 1% en poids d'un agent épaississant cellulosique de type méthylhydroxyéthyl-cellulose ou hydroxyéthyl-cellulose ;
(IX) 0,01 à 0,08% en poids d'hydroxyde de sodium en tant qu'agent alcalinisant ;
(X) 20 à 45% en poids d'eau ayant une dureté inférieure à 10°f (1,78°f = 10 mg/l de CaO) ;
(XI) 0,02 à 0,2% en poids d'un parfum dont l'odeur est étroitement liée à la couleur du pigment (II), et
la peinture est de la couleur d'un objet émettant ledit parfum, de sorte qu'il y a une correspondance entre la couleur de la peinture et l'odeur dégagée par ledit parfum.

2. Peinture à l'eau selon la revendication 1, **caractérisée en ce que** le pigment est choisi, en fonction de la couleur devant être donnée à la peinture, parmi les composés suivants : le dioxyde de titane, l'oxyde de fer rouge, l'oxyde de fer jaune, le bleu de phtalocyanine, le vert de phtalocyanine, le noir de fumée, le jaune organique, le rouge organique, l'orange organique et le violet organique.

3. Peinture à l'eau selon la revendication 1, **caractérisée en ce que** le parfum est choisi dans le groupe constitué par les aromes de rose, de pêche, de citron, d'agrume, de banane, de lilas, de lavande, de pomme, de vanille, d'orange et de cannelle.

4. Peinture à l'eau selon la revendication 1, **caractérisée en ce qu'**elle est exempte d'agents de coalescence.

5. Peinture à l'eau selon la revendication 1, **caractérisée en ce que** ledit conservateur est exempt de produits capables de dégager du formol.

6. Peinture à l'eau selon la revendication 1, **caractérisée en ce que**, sous forme de peinture liquide, elle ne contient pas de grumeaux ou de sédiment dans le récipient d'origine fermé hermétiquement, maintenant un bon état de conservation pendant 1 an.

7. Peinture à l'eau selon la revendication 1, **caractérisée en ce que**, sous forme de peinture liquide, sa viscosité est de 90 à 120 K.U., mesurée à une température de 20 à 30°C.

8. Peinture à l'eau selon la revendication 1, **caractérisée en ce que**, sous forme de peinture liquide, sa densité est de 1,52 à 1,62 g/cm³.

9. Peinture à l'eau selon la revendication 1, **caractérisée en ce que**, sous forme de peinture liquide, elle permet d'appliquer une couche de peinture avec un rendement de 8 à 12 m²/l en fonction de l'état d'origine de la surface à peindre.

10. Peinture à l'eau selon la revendication 1, **caractérisée en ce que**, sous forme de peinture liquide, dans une application standard, la durée de séchage de la surface est d'environ 30 à 60 minutes.

11. Peinture à l'eau selon la revendication 1, **caractérisée en ce que** la peinture appliquée à sec a un fini lisse et mat.

12. Peinture à l'eau selon la revendication 1, **caractérisée en ce que**, sous forme de peinture sèche et appliquée, sa lessivabilité est de 3 000 à 5 000 d.p. "d.p." signifiant double passage, selon les normes DIN 53 778 et UNE 48 284.

13. Peinture à l'eau selon la revendication 1, **caractérisée en ce que**, sous forme de peinture sèche et appliquée, son pouvoir couvrant à 120 microns de produits humides, exprimé en rapport de contraste, est un facteur compris entre 0,90 et 0,98.

14. Peinture à l'eau selon la revendication 1, **caractérisée en ce que**, sous forme de peinture sèche et appliquée, son degré de matité correspond à une mesure de brillance <4 à 60° d'angle de mesure et <8 à 85° d'angle de mesure.

15. Procédé de préparation d'une peinture à l'eau selon la revendication 1, **caractérisé en ce qu'**il comprend les étapes suivantes consistant à :
a) obtenir une formulation de peinture de base blanche ;
b) ajouter à ladite formulation de peinture de base un ou plusieurs pigments prédispersés pour lui donner la couleur souhaitée, sauf dans le cas d'une peinture blanche ;
c) ajouter à la formulation colorée issue de l'étape b) un ou plusieurs parfums associés à la couleur de la peinture finale.

16. Procédé de préparation selon la revendication 15, **caractérisé en ce que**, dans ladite étape (a), tous les composants cités dans la revendication 2, à l'exception des pigments et des parfums, sont mélangés de manière appropriée dans ladite étape (a) afin d'obtenir la peinture de base blanche.

17. Procédé selon la revendication 15, **caractérisé en ce que**, sauf dans le cas où la peinture souhaitée finale est d'une couleur autre que blanche, un pigment choisi parmi l'oxyde de titane, l'oxyde de fer rouge, l'oxyde de fer jaune, le bleu de phtalocyanine, le vert de phtalocyanine, le noir de fumée, le jaune organique, le rouge organique, l'orange organique et le violet organique est ajouté dans ladite étape (b) à ladite peinture de base blanche.

18. Procédé selon la revendication 15, **caractérisé en ce qu'**un parfum d'agrume est ajouté à ladite peinture de base blanche dans ladite étape (c).

19. Procédé selon la revendication 15, **caractérisé en ce que** la peinture finale obtenue a une couleur, déterminée avec un Spectraflash 600 -Datacolor International - dans la zone de couleur définie par une valeur centrale que les coordonnées cielab L,a,b définissent dans l'espace colorimétrique cielab dans des conditions de lumière/obscurité : F2 10 Deg et DE selon le système C.M.C. Ladite plage est représentée par les données suivantes :
| | | | |
|---|---|---|---|
| Pêche : Elle se situe dans la zone de couleur définie par : | | | |
| L = 84,38 | a = 15,61 | b = 38,61 | et DE = 10 |
| Rose : Elle se situe dans la zone de couleur définie par : | | | |
| L = 83,93 | a = 14,00 | b = 9,53 | et DE = 10 |
| Jaune citron : Elle se situe dans la zone de couleur définie par : | | | |
| L = 94,40 | a = -5,11 | b = 47,71 | et DE = 10 |
| Jaune banane : Elle se situe dans la zone de couleur définie par : | | | |
| L = 89,93 | a = 2,49 | b = 57,75 | et DE = 10 |
| Violet : Elle se situe dans la zone de couleur définie par : | | | |
| L = 73,44 | a = 1,24 | b = 25,05 | et DE = 10 |
| Bleu : Elle se situe dans la zone de couleur définie par : | | | |
| L = 72,02 | a = -6,57 | b = -22,24 | et DE = 10 |
| Vert pomme : Elle se situe dans la zone de couleur définie par : | | | |
| L = 83,93 | a = -9,84 | b = 21,73 | et DE = 10 |
| Vanille : Elle se situe dans la zone de couleur définie par : | | | |
| L = 92,18 | a = 0,20 | b = 35,58 | et DE = 10 |
| Orange : Elle se situe dans la zone de couleur définie par : | | | |
| L = 82,27 | a = 18,84 | b = 38,65 | et DE = 10 |
| Canelle : Elle se situe dans la zone de couleur définie par : | | | |
| L = 76,01 | a = 11,95 | b = 33,01 | et DE = 10 |

20. Procédé selon la revendication 15, **caractérisé en ce qu'**un parfum est ajouté dans l'étape (c), de manière à ce que le parfum soit associé à la couleur de la peinture finale selon les associations suivantes :
- Pêche : pêches mûres
- Rose : roses
- Jaune citron : citrons mûrs
- Jaune banane : bananes mûres
- Violet : lilas
- Bleu : lavande
- Vert pomme : pommes mûres
- Vanille : vanille
- Orange : oranges mûres
- Cannelle : cannelle

21. Procédé selon la revendication 15, **caractérisé en ce que** la peinture finale obtenue est blanche, raison pour laquelle l'étape (b) est omise et un parfum d'agrume est ajouté dans l'étape (c).

22. Procédé selon la revendication 15, **caractérisé en ce que** le parfum produit une odeur dont la durée, une fois la peinture appliquée, est comprise entre 3 et 7 jours.

23. Procédé selon la revendication 15, **caractérisé en ce que** ledit parfum est constitué de mélanges chimiques complexes de composés odorants de type acétate, aldéhyde, alcool, salicylate et huile essentielle naturelle.

24. Utilisation de peintures à l'eau selon l'une quelconque des revendications 1 à 14 obtenues par le procédé selon l'une quelconque des revendications 15 à 23 pour enduire et décorer des surfaces dans le secteur de la construction.

25. Utilisation selon la revendication 24, **caractérisée en ce que** lesdites surfaces sont des murs extérieurs ainsi qu'intérieurs.

26. Utilisation selon la revendication 25, **caractérisée en ce que** lesdites surfaces sont des murs intérieurs d'espaces habités.
